# EUROPEAN PATENT SPECIFICATION

(11) **EP 4 098 418 B1**
(45) Date of publication and mention of the grant of the patent: **02.12.2026**
(21) Application number: 22175927.7
(22) Date of filing: 27.05.2022
(51) Int. Cl.: B29B 15/12, B29C 70/50, B29B 11/16

(54) **METHOD AND APPARATUS FOR MANUFACTURING PRE-PREG**
VERFAHREN UND VORRICHTUNG ZUM HERSTELLEN VON PREPREG
PROCÉDÉ ET APPAREIL DE FABRICATION DE PRÉ-IMPRÉGNÉS

(30) Priority: 28.05.2021 TW 110119590
(43) Date of publication of application: 07.12.2022
(73) Proprietor: FORMOSA PLASTICS CORPORATION, Kaohsiung City (TW)
(72) Inventor: Chang, Yi-Chuan, Kaohsiung City (TW); Chou, Chien-Hsu, Kaohsiung City (TW); Hwang, Long-Tyan, Kaohsiung City (TW)
(74) Representative: Lang, Christian

(56) References cited:
- CN-A- 111 716 587
- JP-A- 2014 148 573
- JP-A- S6 183 006
- US-B2- 7 811 002

## Description

### BACKGROUND

### Field of Invention

The present invention relates to a technique of manufacturing a pre-preg, and more particularly to a method and an apparatus for manufacturing a pre-preg.

### Description of Related Art

When making a pre-preg (preimpregnated fibres), a fiber bundle is firstly extracted from a fiber bundle roll, the fiber bundle is impregnated with a resin by passing through the impregnated resin wiping wheel, and then the resin-impregnated fiber bundle is wound around a winding roller to form a pre-preg cloth.

In such a method, when the fiber bundle is impregnated with the resin, the fiber bundle is wound via the action between the fiber bundle, the wiping wheel, and the winding roller. However, during the start action and the termination action of the winding roller, the wiping wheel do not precisely synchronize with the rotation of the winding roller due to the pulling between the fiber bundle, the wiping wheel, and the winding roller or their own inertia, and thus resulting in a portion of the pre-preg is not fully impregnated.

In another dipping technique of the current techniques, the fiber bundle passes through a resin tank directly, and then the fiber bundle is squeezed by extrusion wheels to remove the excess resin on the fiber bundle, so as to control the resin content of the fiber bundle. However, when the fiber bundle is squeezed, a resin adhesion amount of the fiber bundle is unstable due to the change of the yarn tension. JP 2014 148573 A discloses a method for manufacturing a pre-preg and an apparatus for manufacturing a pre-preg.

### SUMMARY

Therefore, one objective of the present invention is to provide a method and an apparatus for manufacturing a pre-preg, which uses a tension controller to stabilize a tension of a fiber bundle, so as to prevent the tension of the fiber bundle from being affected by the start and the stop of the winding roller, thereby keeping a fit degree between the fiber bundle and the wiping wheel to achieve an effect that each yarn in the fiber bundle can be fully impregnated with a resin. In addition, because the tension on the fiber bundle is stable, an amount of hairiness of the fibers can be reduced.

Another objective of the present invention is to provide a method and an apparatus for manufacturing a pre-preg, which uses rollers with smooth surfaces to transport a fiber bundle, so as to flatten and widen the fiber bundle. Therefore, ear-folding of the fiber bundle can be greatly reduced, a width of the fiber bundle can be stabilized, an impregnation effect of the fiber bundle can be enhanced, and a resin content variation of the pre-preg can be effectively reduced.

According to the aforementioned objectives, the present invention provides a method according to claim 1.

According to one embodiment of the present invention, before using the rollers to transfer the fiber bundle, the method further includes performing a surface treatment on the rollers to form a rolling surface of each of the rollers having a roughness from about 0.2 µm to about 25 µm.

According to one embodiment of the present invention, performing the surface treatment includes performing a surface electroplating treatment, a heat treatment, a hot dip plating treatment, a thermal spray treatment, a redox treatment, a painting treatment, or a coating treatment under vacuum on the rollers.

According to one embodiment of the present invention, performing the surface electroplating treatment includes coating a hard chrome layer on the rolling surface of each of the rollers.

According to one embodiment of the present invention, a number of the rollers is from 2 to 12.

According to the present invention, the tension controller is disposed between the rollers and the wiping wheel.

According to the aforementioned objectives, the present invention further provides an apparatus according to claim 5.

According to one embodiment of the present invention, a roughness of a rolling surface of each of the rollers is from about 0.2 µm to about 25 µm.

According to one embodiment of the present invention, a number of the rollers is from 2 to 12.

According to one embodiment of the present invention, a rolling surface of each of the rollers is coated with a hard chrome layer.

### BRIEF DESCRIPTION OF THE DRAWINGS

The above and other objectives, features, advantages, and examples of the present invention can be more apparent and understood by reading the following detailed description of the embodiment, with reference made to the accompanying drawings as follows:
FIG. 1 is a schematic instillation diagram of an apparatus for manufacturing a pre-preg in accordance with one embodiment of the present invention; and
FIG. 2 is a flow chart illustrating a method for manufacturing a pre-preg in accordance with one embodiment of the present invention.

### DETAILED DESCRIPTION

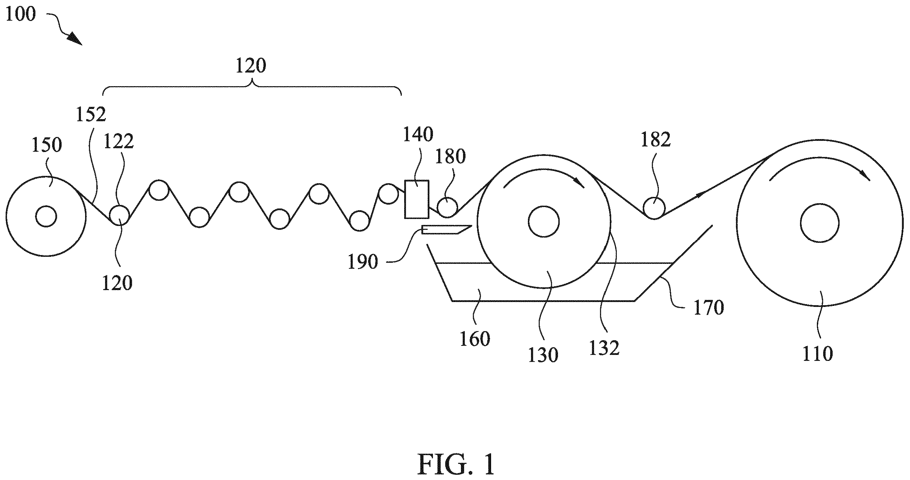

Referring to FIG. 1, FIG. 1 is a schematic instillation diagram of an apparatus for manufacturing a pre-preg in accordance with one embodiment of the present invention. An apparatus 100 for manufacturing a pre-preg may be used to manufacture a pre-preg cloth. In the present invention, the apparatus 100 for manufacturing the pre-preg may mainly include a winding roller 110, several rollers 120, a wiping wheel 130, and a tension controller 140.

The winding roller 110 may be used to wind a fiber bundle 152 of a fiber bundle roll 150, in which the fiber bundle roll 150 is formed by winding the fiber bundle 152. For example, the winding roller 110 may be located at the most downstream of the entire apparatus 100 for manufacturing the pre-preg, the fiber bundle roll 150 may be located at the most upstream of the apparatus 100 for manufacturing the pre-preg, and the winding roller 110 located downstream can wind the fiber bundle 152 from the upstream.

The rollers 120 are disposed between the fiber bundle roll 150 and the winding roller 110. In some examples, a material of the rollers 120 is a tool steel or a stainless steel, such as stainless steel 304. The rollers 120 may be sequentially arranged between the fiber bundle roll 150 and the winding roller 110 along a direction of the fiber bundle roll 150 toward the winding roller 110, and the rollers 120 are separated from each other. In some examples, the rollers 120 are separated from each other by a distance and are staggered up and down, as shown in FIG. 1. For example, the rollers 120 are sequentially arranged with a fixed pitch. The most upstream one of these rollers 120 is adjacent to the fiber bundle roll 150.

The rollers 120 may be used to transfer the fiber bundle 152 from the fiber bundle roll 150. The fiber bundle 152 is meanderingly wound through the rollers 120 in sequence, and is adhered to a portion of a rolling surface 122 of each roller 120. For example, as shown in FIG. 1, the fiber bundle 152 firstly passes through the rolling surface 122 at the bottom of the most upstream one of the rollers 120, then passes through the rolling surface 122 at the top of the next one of the rollers 120, subsequently passes through the rolling surface 122 at the bottom of the further next one of the rollers 120, and so on. A portion of the rolling surface 122 of each roller 120 is in contact with the fiber bundles 152, such that the rollers 120 can flatten the fiber bundle 152 to expand a width of the fiber bundle 152. In some examples, a number of the rollers 120 is from 2 to 12. In some preferred examples, the number of the rollers 120 is from 5 to 8. The fiber bundle 152 can be effectively flattened by using several rollers 120 to transfer the fiber bundle 152, so as to obtain the fiber bundle 152 with a larger and stable width.

In some examples, the roller 120 has a flat and smooth rolling surface 122, such that it can ensure that the width of the fiber bundle 152 is stable after passing through the roller 120, ear-folding of the fiber bundles 152 can be greatly reduced, and an amount of hairiness of the fiber bundle 152 can be effectively decreased. In some examples, before using the rollers 120 to transport the fiber bundle 152, a surface treatment is performed on the rollers 120 to reduce a roughness of the rolling surface 122 of each of the rollers 120 to about 0.2 µm to about 25 µm. In some exemplary examples, the roughness of the rolling surfaces 122 of the rollers 120 is from about 0.2 µm to about 6.3 µm. In some exemplary examples, the performing of the surface treatment on the rollers 120 may include performing a surface electroplating treatment, a heat treatment, a hot dip plating treatment, a thermal spray treatment, a redox treatment, a painting treatment, or a coating treatment under vacuum performed on the rollers 120. For example, when the surface electroplating treatment is performed on the rollers 120, a layer of hard chrome may be plated on the rolling surface 122 of each roller 120, thereby reducing the roughness of the rolling surface 122 of each roller 120. In addition, when the heat treatment is performed on the roller 120, the hardness of the roller 120 can be increased, thereby reducing the roughness of the rolling surface 122 of the roller 120.

The wiping wheel 130 is disposed between the rollers 120 and the winding roller 110, that is, between the most downstream one of the rollers 120 and the winding roller 110. The wiping wheel 130 can transfer the fiber bundle 152 from the rollers 120. A wheel surface 132 of the wiping wheel 130 is adhered with a resin 160. In some examples, the apparatus 100 for manufacturing the pre-preg may include a resin supply device for supplying the resin 160 to the wheel surface 132 of the wiping wheel 130. In some exemplary examples, as shown in FIG. 1, the resin supply device may be a tank 170 containing the resin 160. The tank 170 may be disposed below the wiping wheel 130, and the lower portion of the wiping wheel 130 can be immersed in the resin 160 in the tank 170. With the rotation of the wiping wheel 130, the wheel surface 132 of the wiping wheel 130 can dip the resin 160 in the tank 170. The fiber bundle 152 can pass through the wiping wheel 130 and be attached to a portion of the wheel surface 132 of the wiping wheel 130. For example, the fiber bundle 152 can be attached to the upper wheel surface 132 of the wiping wheel 130, as shown in FIG. 1. As the wiping wheel 130 conveys the fiber bundle 152, the fiber bundle 152 can be impregnated with the resin 160 on the wheel surface 132 of the wiping wheel 130. The fiber bundle 152 impregnated with the resin 160 may then be wound by the winding roller 110.

In some examples, the resin 160 impregnating on the fiber bundle 152 is a thermosetting resin. For example, the resin 160 may be an epoxy resin, a vinyl resin, a phenolic resin, or an unsaturated polyester resin. In addition, a viscosity of the resin 160 may be, for example, about 200 cps to about 10000 cps.

In some examples, the apparatus 100 for manufacturing the pre-preg may optionally include two adjusting rollers 180 and 182. The two adjusting rollers 180 and 182 may be respectively disposed at the upstream and the downstream of the wiping wheel 130, in which the adjusting roller 180 is disposed between the most downstream one of the rollers 120 and the wiping wheel 130, and the adjusting roller 182 is disposed between the wiping wheel 130 and the winding roller 110. The adjusting the rollers 180 and 182 can adjust a travel path of the fiber bundle 152, such that the fiber bundle 152 transmitted from the rollers 120 can pass through the upper wheel surface 132 of the wiping wheel 130 and be closely adhered to the wheel surface 132. For example, the fiber bundle 152 may firstly pass under the adjusting roller 180, next go upward and pass through the upper wheel surface 132 of the wiping wheel 130, and then pass under the adjusting roller 182. That is, the adjusting rollers 180 and 182 respectively located on the upstream side and the downstream side of the wiping wheel 130 can adjust a path of the fiber bundle 152 and press the fiber bundle 152 on the upper wheel surface 132 of the wiping wheel 130.

As shown in FIG. 1, the apparatus 100 for manufacturing the pre-preg may optionally include scraper 190. The scraper 190 is adjacent to one side of the wiping wheel 130 and may be located above the tank 170. The scraper 190 can scrape off the excess resin 160 adhered to the wheel surface 132 of the wiping wheel 130, such that the resin 160 on the wheel surface 132 of the wiping wheel 130 is more evenly distributed, thereby enhancing uniformity of the resin content of the fiber bundle 152.

Continuing to refer to FIG. 1, the tension controller 140 is disposed between the rollers 120 and the wiping wheel 130, i.e. between the most downstream one of the rollers 120 and the wiping wheel 130. In some exemplary examples, the tension controller 140 is disposed between the most downstream one of the rollers 120 and the adjusting roller 180. The tension controller 140 is configured to regulate a tension of the fiber bundle 152 on the rollers 120 and the wiping wheel 130. Therefore, the tension controller 140 can stabilize the tension of the fiber bundle 152 during the conveying process, and can avoid inertia actions of the fiber bundle 152 due to activation tension and loss of tension caused by the start and the stop of the winding roller 110. Accordingly, a fit degree between the fiber bundle 152 and the wheel surface 132 of the wiping wheel 130 can be maintained, so as to achieve an effect that each yarn in the fiber bundle 152 can be fully impregnated with the resin 160.

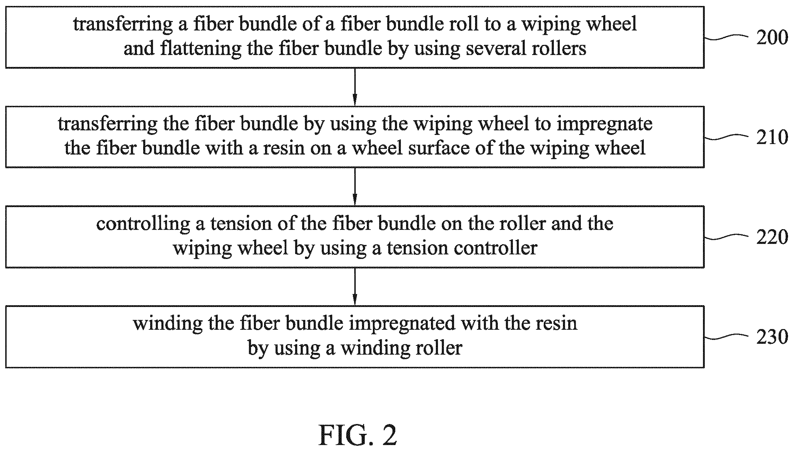

Referring to FIG. 2, FIG. 2 is a flow chart illustrating a method for manufacturing a pre-preg in accordance with one embodiment of the present invention. The method for manufacturing a pre-preg of the present invention may be performed by using the apparatus 100 for manufacturing the pre-preg shown in FIG. 1. The configuration and arrangement of each device of the apparatus 100 for manufacturing the pre-preg have been described in detail above, and will not be repeated here.

When manufacturing a pre-preg, a step 200 may be performed to use several rollers 120 to transfer the fiber bundle 152 of the fiber bundle roll 150 to the wiping wheel 130. The fiber bundle 152 can meander through the rollers 120 in sequence, and can be adhered to a portion of the rolling surface 122 of each roller 120, such that these rollers 120 can flatten the fiber bundle 152 and expand the width of the fiber bundle 152 when transferring the fiber bundle 152. In some examples, before the fiber bundle 152 is transferred by the rollers 120, a surface treatment may be further performed on the rollers 120, so as to reduce the roughness of the rolling surface 122 of each roller 120. After the surface treatment, the roughness of the rolling surface 122 of each roller 120 may be, for example, from about 0.2 µm to about 25 µm, preferably from about 0.2 µm to about 6.3 µm. In the example that the rolling surfaces 122 of the rollers 120 are flat and smooth, the surface treatment of the rollers 120 can be omitted. For example, when the surface treatment is performed on the rollers 120, a surface electroplating treatment, a heat treatment, a hot dip plating treatment, a thermal spray treatment, a redox treatment, a painting treatment, or a coating treatment under vacuum may be performed on the rollers 120. For example, when the surface electroplating treatment is performed, a hard chrome layer may be plated on the rolling surface 122 of each roller 120

After the rollers 120 transfer the fiber bundle 152 to the wiping wheel 130, a step 210 may be performed to continue to transfer the fiber bundle 152 by using the wiping wheel 130. The fiber bundle 152 is adhered to a portion of the wheel surface 132 of the wiping wheel 130. The resin 160 is adhered to the wheel surface 132 of the wiping wheel 130, and the fiber bundle 152 is adhered to a portion of the wheel surface 132, such that as the wiping wheel 130 transfers the fiber bundle 152, the resin 160 on the wheel surface 132 of the wiping wheel 130 can be adhered to the fiber bundle 152. When the fiber bundle 152 is conveyed by the wiping wheel 130, the scraper 190 may be selectively used to scrape off the excess resin 160 adhered to the wheel surface 132 of the wiping wheel 130 to enhance the distribution uniformity of the resin 160 on the wheel surface 132 of the wiping wheel 130.

In some exemplary examples, as shown in FIG. 1, during the transferring of the fiber bundle 152, the adjusting rollers 180 and 182 respectively located on the upstream side and the downstream side of the wiping wheel 130 may be used to adjust a travel path of the fiber bundle 152, such that the fiber bundle 152 transferred from the rollers 120 can pass through the upper wheel surface 132 of the wiping wheel 130 and can be closely adhered to the wheel surface 132.

During the transferring of the fiber bundle 152 by the rollers 120 and the wiping wheel 130, a step 220 may be performed to use the tension controller 140, which is disposed between the rollers 120 and the wiping wheel 130, to regulate the tension of the fiber bundle 152 on the rollers 120 and the wiping wheel 130. Thus, the stability of the tension of the fiber bundle 152 during the transferring process can be enhanced, and inertia actions of the fiber bundle 152 due to activation tension and loss of tension caused by the start and the stop of the winding roller 110 can be avoided. Therefore, a stable fit between the fiber bundle 152 and the wheel surface 132 of the wiping wheel 130 can be maintained, such that each yarn in the fiber bundle 152 can be fully impregnated with the resin 160.

When the fiber bundle 152 is transferred, a step 230 may be performed to use the winding roller 110 to wind the fiber bundle 152 conveyed from the wiping wheel 130 and impregnated with the resin 160 to substantially complete the production of the pre-preg. The transferring and winding of the fiber bundle 152 are achieved by the mutual cooperation of the actions of the fiber bundle 152, the rollers 120, the wiping wheel 130, and the winding roller 110.

Several embodiments are specifically described below with reference to the apparatus and the method for manufacturing the pre-preg of the present invention. The fiber bundles used in these examples are carbon fiber 12K.

The embodiment 1 uses surface-treated rollers to transfer a fiber bundle, in which a number of the rollers may be 2 to 12, such as 5 to 8. In the example, a width of the fiber bundle is measured between the tension controller 140 and the adjusting roller 180 in FIG. 1, and an ear-folding condition of the fiber bundle is observed. The results are shown in the table 1 below. The width of the fiber bundle is the average of 20 measurement results, and the measurement is performed every 30 seconds; and the number of ear folds is the number of ear folds that occur in the fiber bundle in a length of 500 meters.

**Table 1**

| using roll? | width of the fiber bundle (mm) | number of ear fold (times) |
|---|---|---|
| No | 7.9 | 13 |
| Yes | 10.4 | 4 |

It can be seen from the table 1 that the fiber bundle can be effectively flattened by using the rollers to assist the transferring of the fiber bundle, so the width of the fiber bundle is greater than that of the fiber bundle transferred without using the rollers. In addition, the number of the ear folds in the fiber bundle conveyed by using the rollers is also significantly less than that of the fiber bundle, which is not conveyed by the rollers.

The embodiment 2 additionally uses a tension controller. The amount of hairiness of the fiber bundle is observed, and the observation results are listed in the table 2 below. The amount of hairiness is the amount of hairiness that occurs in a fiber bundle in a length of 500 meters.

**Table 2**

| using tension controller? | hairiness (g) |
|---|---|
| No | 0.5~1 |
| Yes | Hardly any |

It can be seen from the table 2 that the tension of the fiber bundle is stable by using the tension controller, such that there is hardly any hairiness in the fiber bundle, and the hairiness of the fiber bundle is significantly less than that of the fiber bundle without using the tension controller to adjust the tension.

The embodiment 3 uses rollers and a tension controller simultaneously. In the example, the width of the fiber bundle is similarly measured, for example, between the tension controller 140 and the adjusting roller 180 in FIG. 1, and the resin content variation of the resulting pre-preg is measured. The results are shown in the table 3 below. The width of the fiber bundle is the average of 20 measurement results, and the measurement is performed every 30 seconds; and the resin content variation is a measure of the resin content variation between 20 small units in the pre-preg, and each small unit is 5 cm*5 cm.

**Table 3**

| using roll? | using tension controller? | width of the fiber bundle (mm) | resin content variation (%) |
|---|---|---|---|
| No | No | 7.9 | 16.2 |
| Yes | No | 10.4 | 12.2 |
| No | Yes | 8.3 | 8.4 |
| Yes | Yes | 11.7 | 5.4 |

**It** can be seen from the table 3 that after adding the tension controller, it can prevents the tension of the fiber bundle from being too large or too small due to the inertial actions of starting and stopping. Furthermore, the additional rollers are used to flatten the fiber bundle and expand the width of the fiber bundle. Accordingly, the impregnation of the fiber bundle and the resin is better, and the resin content variation is effectively reduced.

According to the aforementioned embodiments, one advantage of the present invention is that the present invention uses a tension controller to stabilize a tension of a fiber bundle, so as to prevent the tension of the fiber bundle from being affected by the start and the stop of the winding roller, thereby keeping a fit degree between the fiber bundle and the wiping wheel to achieve an effect that each yarn in the fiber bundle can be fully impregnated with a resin. In addition, because the tension on the fiber bundle is stable, an amount of hairiness of the fibers can be reduced.

Another advantage of the present invention is that the present invention uses rollers with smooth surfaces to transport a fiber bundle, so as to flatten and widen the fiber bundle. Therefore, ear-folding of the fiber bundle can be greatly reduced, a width of the fiber bundle can be stabilized, an impregnation effect of the fiber bundle can be enhanced, and a resin content variation of the pre-preg can be effectively reduced.

## Claims

1. A method for manufacturing a pre-preg, comprising:
using a plurality of rollers (120) to transfer a fiber bundle (152) of a fiber bundle roll (150) to a wiping wheel (130) and to flatten the fiber bundle (152), wherein the rollers (120) are arranged in sequence between the fiber bundle roll (150) and the wiping wheel (130) and are separated from each other;
using the wiping wheel (130) to transfer the fiber bundle (152) so as to impregnate the fiber bundle (152) with a resin (160) on a wheel surface (132) of the wiping wheel (130);
using a tension controller (140) to control a tension of the fiber bundle (152) on the rollers (120) and the wiping wheel (130) during the transferring of the fiber bundle (152) by the rollers (120) and the wiping wheel (130), wherein the tension controller (140) is disposed between the rollers (120) and the wiping wheel (130); and
using a winding roller (110) to wind the fiber bundle (152) impregnated with the resin (160), wherein using the winding roller (110) to wind the fiber bundle (152) impregnated with the resin (160) comprises using the tension controller (140) to stabilize the tension of the fiber bundle (152) to prevent the tension of the fiber bundle (152) from being affected by the start and the stop of the winding roller (110).

2. The method of claim 1 wherein a number of the rollers is from 8 to 12.

3. The method of any of claims 1-2 further comprising using two adjusting rollers (180, 182) to adjust a travel path of the fiber bundle (152), so as to make the fiber bundle (152) transmitted from the rollers (120) pass through the wheel surface (132) of the wiping wheel (130) and be closely adhered to the wheel surface (132).

4. The method of claim 3 wherein the adjusting rollers (180, 182) are respectively disposed between the rollers (120) and the wiping wheel (130) and between the wiping wheel (130) and the winding roller (110).

5. An apparatus (100) for manufacturing a pre-preg comprising:
a winding roller (110) configured to wind a fiber bundle (152) of a fiber bundle roll (150);
a plurality of rollers (120) arranged between the fiber bundle roll (150) and the winding roller (110), and configured to transfer and flatten the fiber bundle (152), wherein a number of the rollers is from 8 to 12 and the rollers (120) are arranged between the fiber bundle roll (150) and the winding roller (110) in sequence and are separated from each other;
a wiping wheel (130) disposed between the rollers (120) and the winding roller (110), and configured to transfer the fiber bundle (152) from the rollers (120), so as to impregnate the fiber bundle (152) with a resin (160) on a wheel surface (132) of the wiping wheel (130), wherein the winding roller (110) winds the fiber bundle (152) impregnated with the resin (160); and
a tension controller (140) disposed between the rollers (120) and the wiping wheel (130), and configured to control a tension of the fiber bundle (152) on the rollers (120) and the wiping wheel (130) and stabilize the tension of the fiber bundle (152) when the winding roller (110) starts and stops so as to prevent the tension of the fiber bundle (152) from being affected by the start and the stop of the winding roller (110).

6. The apparatus (100) for manufacturing the pre-preg of claim 5, wherein a rolling surface (122) of each of the rollers (120) is coated with a hard chrome layer.

7. The apparatus (100) for manufacturing the pre-preg of any of claims 5-6, wherein the rollers (120) are arranged between the fiber bundle roll (150) and the wiping wheel (130) in sequence.

8. The apparatus (100) for manufacturing the pre-preg of claim 7, further comprising two adjusting rollers (180, 182) respectively disposed between the rollers (120) and the wiping wheel (130) and between the wiping wheel (130) and the winding roller (110), wherein the adjusting rollers (180, 182) are configured to adjust a travel path of the fiber bundle (152), so as to make the fiber bundle (152) transmitted from the rollers (120) pass through the wheel surface (132) of the wiping wheel (130) and be closely adhered to the wheel surface (132).

## Patentansprüche

1. Verfahren zum Herstellen eines Prepregs, welches umfasst:
Verwenden von einer Vielzahl von Walzen (120), um ein Faserbündel (152) von einer Faserbündelrolle (150) auf ein Abstreifrad (130) zu übertragen und das Faserbündel (152) zu glätten, wobei die Walzen (120) nacheinander zwischen der Faserbündelrolle (150) und dem Abstreifrad (130) angeordnet sind und voneinander getrennt sind;
Verwenden des Abstreifrads (130) zur Weiterleitung des Faserbündels (152), sodass das Faserbündel (152) mit einem Harz (160) an einer Radoberfläche (132) des Abstreifrads (130) imprägniert wird;
Verwenden eines Spannungsreglers (140), um eine Spannung des Faserbündels (152) an den Walzen (120) und dem Abstreifrad (130) während des Weiterleitens des Faserbündels (152) durch die Walzen (120) und das Abstreifrad (130) zu kontrollieren, wobei der Spannungsregler (140) zwischen den Walzen (120) und dem Abstreifrad (130) angeordnet ist; und
Verwenden einer Aufwickelrolle (110), um das mit dem Harz (160) imprägnierte Faserbündel (152) aufzuwickeln, wobei das Verwenden der Aufwickelrolle (110) zum Aufwickeln des mit dem Harz (160) imprägnierten Faserbündels (152) die Verwendung des Spannungsreglers (140) umfasst, um die Spannung des Faserbündels (152) zu stabilisieren, um zu verhindern, dass die Spannung des Faserbündels (152) durch das Anlaufen und das Anhalten der Aufwickelrolle (110) beeinflusst wird.

2. Verfahren nach Anspruch 1, bei welchem eine Anzahl der Walzen zwischen 8 und 12 beträgt.

3. Verfahren nach einem der Ansprüche 1-2, welches ferner die Verwendung von zwei Einstellrollen (180, 182) zum Einstellen einer Laufbahn des Faserbündels (152) umfasst, um zu erreichen, dass das von den Walzen (120) übertragene Faserbündel (152) die Radoberfläche (132) des Abstreifrads (130) passiert und eng an der Radoberfläche (132) anliegt.

4. Verfahren nach Anspruch 3, bei welchem die Einstellrollen (180, 182) jeweils zwischen den Walzen (120) und dem Abstreifrad (130) und zwischen dem Abstreifrad (130) und der Aufwickelrolle (110) angeordnet sind.

5. Vorrichtung (100) zum Herstellen eines Prepregs, welche umfasst:
eine Aufwickelrolle (110), die zum Aufwickeln eines Faserbündels (152) einer Faserbündelrolle (150) konfiguriert ist;
eine Vielzahl von Walzen (120), die zwischen der Faserbündelrolle (150) und der Aufwickelrolle (110) angeordnet sind, und zum Übertragen und Glätten des Faserbündels (152) konfiguriert sind, wobei eine Anzahl der Walzen zwischen 8 und 12 beträgt und die Walzen (120) nacheinander zwischen der Faserbündelrolle (150) und der Aufwickelrolle (110) angeordnet sind und voneinander getrennt sind;
ein Abstreifrad (130), das sich zwischen den Walzen (120) und der Aufwickelrolle (110) befindet und zur Weiterleitung des Faserbündels (152) von den Walzen (120) konfiguriert ist, um das Faserbündel (152) mit einem Harz (160) an einer Radoberfläche (132) des Abstreifrads (130) zu imprägnieren, wobei die Aufwickelrolle (110) das mit dem Harz (160) imprägnierte Faserbündel (152) aufwickelt; und
einen Spannungsregler (140), der zwischen den Walzen (120) und dem Abstreifrad (130) angeordnet ist und zur Steuerung einer Spannung des Faserbündels (152) an den Walzen (120) und dem Abstreifrad (130) konfiguriert ist und die Spannung des Faserbündels (152) stabilisiert, wenn die Aufwickelrolle (110) startet und stoppt, um zu verhindern, dass die Spannung des Faserbündels (152) durch das Anlaufen und das Anhalten der Aufwickelrolle (110) beeinflusst wird.

6. Vorrichtung (100) zum Herstellen des Prepregs nach Anspruch 5, bei welcher eine Rollfläche (122) von jeder der Walzen (120) mit einer Hartchromschicht beschichtet ist.

7. Vorrichtung (100) zum Herstellen des Prepregs nach einem der Ansprüche 5-6, bei welcher die Walzen (120) nacheinander zwischen der Faserbündelrolle (150) und dem Abstreifrad (130) angeordnet sind.

8. Vorrichtung (100) zum Herstellen des Prepregs nach Anspruch 7, welche ferner zwei Einstellrollen (180, 182) umfasst, die jeweils zwischen den Walzen (120) und dem Abstreifrad (130) und zwischen dem Abstreifrad (130) und der Aufwickelrolle (110) angeordnet sind, wobei die Einstellrollen (180, 182) zum Einstellen einer Laufbahn des Faserbündels (152) konfiguriert sind, um zu erreichen, dass das von den Walzen (120) übertragene Faserbündel (152) die Radoberfläche (132) des Abstreifrads (130) passiert und eng an der Radoberfläche (132) anliegt.

## Revendications

1. Procédé de fabrication d'un préimprégné, comprenant :
l'utilisation d'une pluralité de rouleaux (120) pour transférer un faisceau de fibres (152) d'un rouleau de faisceau de fibres (150) vers une roue d'essuyage (130) et pour aplatir le faisceau de fibres (152), dans lequel les rouleaux (120) sont disposés en séquence entre le rouleau de faisceau de fibres (150) et la roue d'essuyage (130) et sont séparés les uns des autres ;
l'utilisation de la roue d'essuyage (130) pour transférer le faisceau de fibres (152) afin d'imprégner le faisceau de fibres (152) d'une résine (160) sur une surface de roue (132) de la roue d'essuyage (130) ;
l'utilisation d'un régulateur de tension (140) pour réguler une tension du faisceau de fibres (152) sur les rouleaux (120) et la roue d'essuyage (130) pendant le transfert du faisceau de fibres (152) par les rouleaux (120) et la roue d'essuyage (130), dans lequel le régulateur de tension (140) est disposé entre les rouleaux (120) et la roue d'essuyage (130) ; et
l'utilisation d'un rouleau d'enroulement (110) pour enrouler le faisceau de fibres (152) imprégné de résine (160), dans lequel l'utilisation du rouleau d'enroulement (110) pour enrouler le faisceau de fibres (152) imprégné de résine (160) comprend l'utilisation du régulateur de tension (140) pour stabiliser la tension du faisceau de fibres (152) afin d'empêcher que la tension du faisceau de fibres (152) ne soit affectée par le démarrage et l'arrêt du rouleau d'enroulement (110).

2. Procédé selon la revendication 1, dans lequel le nombre de rouleaux est compris entre 8 et 12.

3. Procédé selon l'une quelconque des revendications 1-2, comprenant en outre l'utilisation de deux rouleaux d'ajustement (180, 182) pour ajuster un parcours de déplacement du faisceau de fibres (152), de manière à ce que le faisceau de fibres (152) transmis par les rouleaux (120) passe à travers la surface de roue (132) de la roue d'essuyage (130) et adhère étroitement à la surface de roue (132).

4. Procédé selon la revendication 3 dans lequel les rouleaux d'ajustement (180, 182) sont respectivement disposés entre les rouleaux (120) et la roue d'essuyage (130) et entre la roue d'essuyage (130) et le rouleau d'enroulement (110).

5. Appareil (100) pour la fabrication d'un préimprégné comprenant :
un rouleau d'enroulement (110) configuré pour enrouler un faisceau de fibres (152) d'un rouleau de faisceau de fibres (150) ;
une pluralité de rouleaux (120) disposés entre le rouleau de faisceau de fibres (150) et le rouleau d'enroulement (110), et configurés pour transférer et aplatir le faisceau de fibres (152), dans lequel le nombre des rouleaux est de 8 à 12 et les rouleaux (120) sont disposés entre le rouleau de faisceau de fibres (150) et le rouleau d'enroulement (110) en séquence et sont séparés les uns des autres ;
une roue d'essuyage (130) disposée entre les rouleaux (120) et le rouleau d'enroulement (110), et configurée pour transférer le faisceau de fibres (152) des rouleaux (120), de manière à imprégner le faisceau de fibres (152) d'une résine (160) sur une surface de roue (132) de la roue d'essuyage (130), dans lequel le rouleau d'enroulement (110) enroule le faisceau de fibres (152) imprégné de résine (160) ; et
un régulateur de tension (140) disposé entre les rouleaux (120) et la roue d'essuyage (130), et configuré pour réguler une tension du faisceau de fibres (152) sur les rouleaux (120) et la roue d'essuyage (130) et stabiliser la tension du faisceau de fibres (152) lorsque le rouleau d'enroulement (110) démarre et s'arrête afin d'empêcher que la tension du faisceau de fibres (152) ne soit affectée par le démarrage et l'arrêt du rouleau d'enroulement (110).

6. Appareil (100) pour la fabrication du préimprégné selon la revendication 5, dans lequel une surface de roulement (122) de chacun des rouleaux (120) est revêtue d'une couche de chrome dur.

7. Appareil (100) pour la fabrication du préimprégné selon l'une quelconque des revendications 5-6, dans lequel les rouleaux (120) sont disposés entre le rouleau de faisceau de fibres (150) et la roue d'essuyage (130) en séquence.

8. Appareil (100) pour la fabrication du préimprégné selon la revendication 7, comprenant en outre deux rouleaux d'ajustement (180, 182) disposés respectivement entre les rouleaux (120) et la roue d'essuyage (130) et entre la roue d'essuyage (130) et le rouleau d'enroulement (110), dans lequel les rouleaux d'ajustement (180, 182) sont configurés pour ajuster un chemin de déplacement du faisceau de fibres (152), de manière à ce que le faisceau de fibres (152) transmis par les rouleaux (120) passe à travers la surface de roue (132) de la roue d'essuyage (130) et adhère étroitement à la surface de roue (132).
